# EUROPÄISCHE PATENTSCHRIFT

(11) **EP 1 596 268 B1**
(45) Veröffentlichungstag und Bekanntmachung des Hinweises auf die Patenterteilung: **24.12.2008**
(21) Anmeldenummer: 05006339.5
(22) Anmeldetag: 23.03.2005
(51) Int. Cl.: G05G 1/14, B60K 23/02, F16D 23/12, B60K 26/02, F16F 1/12

(54) **Lagervorrichtung für eine Federanordnung**
Bearing device for a spring arrangement
Dispositif de palier pour ensemble de ressorts

(30) Priorität: 14.05.2004 DE 102004024089
(43) Veröffentlichungstag der Anmeldung: 16.11.2005
(73) Patentinhaber: AUDI AG, 85045 Ingolstadt (DE)
(72) Erfinder: Bojarra, Thorsten, 85049 Ingolstadt (DE); Stolze, Dirk, 85120 Hepberg (DE)
(74) Vertreter: Asch, Konrad

(56) Entgegenhaltungen:
- EP-A- 0 780 250
- EP-A- 1 136 350
- DE-A1- 19 950 454
- DE-B- 1 150 882
- DE-C1- 19 934 238
- GB-A- 826 459

## Beschreibung

Die Erfindung betrifft eine Lagervorrichtung gemäß der im Oberbegriff des Anspruchs 1 angegebenen Art.

Eine Lagervorrichtung dieser Art ist in der DE 199 34 238 C1 beschrieben. Bei dieser vorbekannten Lagervorrichtung sind ein hängend angeordnetes Pedal und eine damit zusammenwirkende Übertotpunktfeder vorgesehen, wobei die Feder mit ihrem dem Pedal abgewandten Ende in einem Stützlager schwenkbar abgestützt ist.

Aus der DE 199 50 454 A1 ist eine Stellgliedanordnung bekannt, die in Verbindung mit einer zu betätigenden Anordnung eingesetzt werden kann. Die offenbarte Stellgliedanordnung umfasst insbesondere eine Anpassungsanordnung, durch welche die Stellgliedanordnung an sich ändernde Betriebsbedingungen anpassbar ist.

Der Erfindung liegt die Aufgabe zugrunde, eine Lagervorrichtung gemäß der im Oberbegriff des Anspruchs 1 angegebenen Art derart weiterzubilden, dass sie bezüglich vorbestimmter Betätigungskräfte veränderlich oder anpassbar ist.

Diese Aufgabe wird durch die kennzeichnenden Merkmale des Anspruchs 1 in Verbindung mit seinen Oberbegriffsmerkmalen gelöst.

Die zugehörigen Unteransprüche bilden vorteilhafte Weiterbildungen der Erfindung.

Der Erfindung liegt die Erkenntnis zugrunde, dass die Federkraft der Federanordnung im direkten Zusammenhang mit den erforderlichen Betätigungskräften steht und eine Veränderung der Federkraft auch eine Veränderung oder Anpassung der Betätigungskraft ermöglicht.

Bei der erfindungsgemäßen Lagervorrichtung ist die Federanordnung mit ihrem ersten Ende und/oder zweiten Ende im jeweils zugehörigen Lager verstellbar. Hierfür weist das erste und/oder zweite Lager mehrere in der Schwenkebene hintereinander liegend angeordnete Lagerelemente auf, in denen das erste und/oder zweite Ende der Federanordnung wahlweise lagerbar ist. Hierdurch ist die Wirksamkeit der Feder durch eine Verstellung ihres Widerlagers veränderlich und somit auch anpassbar, z. B. an besondere Betätigungskraftverläufe aus ergonomischen Gründen.

Dabei gibt es mehrere Ausgestaltungen, eine veränderte Wirksamkeit der Federkraft zu erreichen. Bei einer Verstellung des oder der Federlager im Sinne einer Verringerung oder Vergrößerung des Lagerabstands lässt sich die Größe der Federkraft direkt verringern oder vergrößern und somit auch die erforderliche Betätigungskraft verändern. Bei einer hierzu seitlichen Verstellung der Federanordnung lässt sich ihr Wirkzeitpunkt bei der Bewegung und ihre Federkraft aufgrund verringerter oder vergrößerter Kraftkomponenten verändern und somit ebenfalls an besondere bzw. gewünschte Betätigungs-Kraftverläufe anpassen. Folglich ermöglicht die Erfindung eine Kinematikvarianz durch Montagevarianz, jedoch ohne Bauteilvarianz. Deshalb zeichnet sich die Erfindung durch eine einfache und kostengünstig herstellbare Konstruktion aus.

Es ist vorteilhaft, dass der Abstand zwischen den Lagern verstellbar ist.

Eine einfache und gut integrierbare Konstruktion lässt sich auch dann erreichen, wenn gemäß einer Ausführungsform der Erfindung das bewegliche Tragteil in einer Ebene bewegbar ist und die Lager in dieser Ebene angeordnet sind.

Der konstruktive Aufwand und insbesondere der Montageaufwand lässt sich dann besonders verringern, wenn das erste Lager zwei oder mehrere, vorzugsweise drei, erste Lagerelemente aufweist und/oder das zweite Lager zwei oder mehrere zweite Lagerelemente aufweist, die hintereinanderliegend etwa auf einer Linie angeordnet sind, die sich quer zu einer ein Lagerelement des ersten Lagers und ein Lagerelement des zweiten Lagers schneidenden Geraden erstreckt. Dabei lässt sich die Federanordnung insbesondere dann durch einfaches Einstecken in die zugeordneten Lagerelemente montieren. Bei dieser Ausgestaltung sind die ersten Lagerelemente und/oder die zweiten Lagerelemente durch Kalotten gebildet und die Enden der Federanordnung durch zu den Kalotten passende hinterschnittene Kugelköpfe gebildet.

Die erfindungsgemäße Konstruktion kann in einfacher Weise und vorteilhaft mit einem bewegbaren Tragteil in Form eines Pedals kombiniert werden.

Das Pedal kann einen Abstand vom ersten Lager aufweisen, der größer ist als die Länge der Federanordnung und sich vom oberen Bereich des Pedals ein Hebelarm zum ersten Lager hin erstreckt, der in seinem freien Endbereich das zweite Lager aufweist. Diese Ausgestaltung führt ebenfalls zu einer einfachen Konstruktion und Funktion.

Die Erfindung eignet sich besonders gut für eine Übertotpunkt-Federanordnung. Die Erfindung ist aber auch dann vorteilhaft, wenn keine Übertotpunkt-Federanordnung vorhanden ist oder die Wirksamkeit der Federanordnung auf der vor und/oder hinter dem Totpunkt angeordneten Wegstrecke beschränkt ist.

Um die Halterung und Führung der Federanordnung oder einer Druckfeder, insbesondere eine Wendelfeder, zu verbessern, ist es vorteilhaft, die Feder zwischen zwei Teleskopteilen anzuordnen.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine Seitenansicht einer erfindungsgemäßen Lagervorrichtung für eine Federanordnung, insbesondere für ein Kraftfahrzeug;
- Fig. 2: die Federanordnung als einzelne Baueinheit.

Die in ihrer Gesamtheit mit 10 bezeichnete Lagervorrichtung ist zur Lagerung einer in ihrer Gesamtheit mit 12 bezeichneten Federanordnung vorgesehen, die zwischen einem stationären Tragteil 14 und einem bewegbaren Tragteil 16 angeordnet ist und sich gerade und vorzugsweise länglich erstreckt, wobei ihre Enden einander gegenüberliegen. Das stationäre Tragteil 14 ist z. B. ein Lagerbock, der in nicht dargestellter Weise an der Karosserie des Kraftfahrzeugs, insbesondere eines Personenkraftwagens, angebaut ist. Die Lagervorrichtung 10 weist ein erstes Lager 18 am stationären Tragteil 14 für ein erstes Ende 20 der Federanordnung 12, und ein zweites Lager 22 am bewegbaren Tragteil 16 für das zweite Ende 24 der Federanordnung 12 auf. Das bewegbare Tragteil 16 ist in einer Führung 26 relativ zum stationären Tragteil 14 hin und her bewegbar, wobei die Führung 26 z. B. am stationären Tragteil 14 oder mittelbar oder unmittelbar an der Karosserie des Kraftfahrzeugs angeordnet sein kann.

Die Führung 26 kann so ausgebildet sein, dass bei einer Bewegung des bewegbaren Tragteils 16 mit dem zweiten Lager 22 der Abstand a zwischen den Lagern 18, 22 sich ändert, z. B. verringert oder vergrößert. Dabei erstreckt sich vorzugsweise die Bewegung in einer Ebene, in der auch die Lager 18, 22 angeordnet und wirksam sind. Die Führung 26 ist vorzugsweise so ausgebildet, dass bei einer Bewegung des bewegbaren Tragteils 16 von einer ersten Bewegungsposition A der Abstand a sich bis zu einer Totpunktstellung 28 hin verringert und dann wieder bis zu einer Bewegungsposition B hin vergrößert. In der Totpunktstellung 28 sind die Enden 20, 24 und das Schwenklager 32a auf einer ersten Geraden G1 angeordnet.

Das bewegbare Tragteil 16 kann ein Pedal 30 sein, dass durch einen Fuß eines Fahrers zwischen den Bewegungspositionen A und B bewegbar ist. Das Pedal 30 ist vorzugsweise in hängender Position mit einer Lagerbohrung 32 auf einem Lagerzapfen 34 in der Bewegungsebene schwenkbar gelagert und es weist an seinem unteren Ende ein Druckteil 30a auf. Dabei ist das Pedal 30 in einem etwa horizontalen Abstand b vom ersten Lager 18 angeordnet, der größer, vorzugsweise etwa doppelt so groß, ist wie die im wesentlichen dem Abstand a entsprechende Länge c der sich vom ersten Lager 18 etwa horizontal zum Pedal 30 hin erstreckenden Federanordnung 12. Der Lagerzapfen 34 ist etwas höher angeordnet als die in der Bewegungsposition A etwa gleich hoch angeordneten Lager 18, 22. Dabei ist das zweite Lager 22 am freien Ende eines Hebelarms 30b angeordnet, der sich vom oberen Endbereich des Pedals 30 seitlich schräg nach unten erstreckt und an seinem freien Ende das zweite Lager 22 aufweist.

Die Federanordnung 12 ist erfindungsgemäß mit ihrem ersten Ende 20 im ersten Lager 18 und/oder mit ihrem zweiten Ende 24 im zweiten Lager 22 verstellbar sein, wobei sie in der eingestellten Position positioniert oder positionierbar ist. Hierfür gibt es mehrere Ausgestaltungsmöglichkeiten. Es kann z. B. der Abstand a verstellbar sein, und/oder es können das jeweilige Ende 20 und/oder 24 der Federanordnung 12 mit dem zugehörigen Lager 18, 22 um das andere Ende 20 bzw. 24 in der Bewegungs- bzw. Schwenkebene verstellbar bzw. kippbar sein. Es sind auch für das erste Lager 18 und oder für das zweite Lager 22 mehrere Lagerelemente in der Bewegungs- bzw. Schwenkebene hintereinanderliegend angeordnet, mit denen das erste und/oder zweite Ende 20, 24 der Federanordnung 12 verbindbar und somit in Stufen verstellbar ist. Bei einer solchen Ausgestaltung ist das betreffende Ende der Federanordnung 12, z. B. das linke Ende 20, im ersten Lager 18 auf einer sich gerade oder gekrümmt erstreckenden Linie L verstellbar, die sich quer zu einer zweiten Geraden G2 erstreckt, die das erste und zweite Lager 18, 22 schneidet.

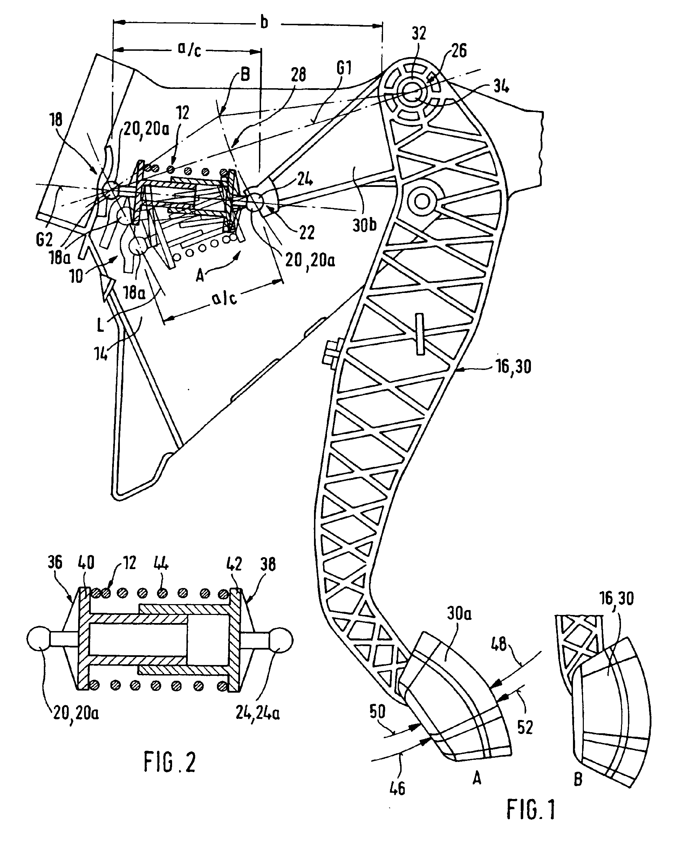

Wie Fig. 1 erkennen lässt, sind die Abstände a zwischen den jeweils zugehörigen Lagerelementen unterschiedlich groß. Dabei nimmt der Abstand a vom untersten Lagerelement des Lagers 18 zum obersten Lagerelement stufenhaft zu. In Fig. 1 ist die Federanordnung 12 in allen drei vorhandenen Lagerelementen des Lagers 18 abgestützt.

Beim Ausführungsbeispiel weist das erste Lager 18 mehrere einander gleiche kugelabschnittförmige Kalotten 18a auf, die in der Bewegungs- bzw. Schwenkebene auf der Linie L hintereinanderliegend angeordnet sind und in die das erste Ende 20 im Lager 18 wahlweise einsetzbar und positionierbar ist. Auch das zweite Lager 22 ist durch eine Kalotte 22a gebildet, in der das zweite Ende 24 sitzt. Die Enden 20, 24 weisen hinterschnittene Kugelköpfe 20a, 24a auf, die so weit hinterschnitten sind, dass die Federanordnung 12 wahlweise verstellt und im Funktionsbetrieb geschwenkt werden kann.

Die vorzugsweise durch die Kalotten 18a gebildeten Lagerelemente befinden sich etwa im oberen Bereich eines unteren linken Quadranten eines dem zweiten Ende 24 zugeordneten gedachten Kreises.

Eine umgekehrte Anordnung mit mehreren hintereinanderliegenden Lagerelementen bzw. Kalotten 22a ist im Rahmen der Erfindung möglich.

Die Federanordnung 12 kann zu ihrer verbesserten Führung und Halterung durch zwei aneinander geführte Teleskopteile 36, 38 jeweils mit einem Federteller 40, 42 gebildet sein, zwischen denen eine Druckfeder 44 angeordnet bzw. eingespannt ist. Von den Federtellern 40, 42 stehen jeweils die vorzugsweise durch hinterschnittene Kugelköpfe 20a, 24a gebildeten Enden 20, 24 ab. Die Federanordnung 12 bzw. die Teleskopteile 36, 38 mit der Druckfeder 44 ist bzw. sind zwischen den Lagerelementen bzw. Kalotten 18a, 22a formschlüssig gehalten, da eine am bewegbaren Tragteil 16 bzw. am Pedal 30 wirksame Rückstell-Federkraft 46 die Federanordnung 12 andauernd axial zusammenzudrücken sucht.

Das bewegbare Lagerteil 16 bzw. das Pedal 30 ist durch die angedeutete Rückstell-Federkraft 46 in seine Bewegungsanfangsposition und gegen einen nicht dargestellten Rückbewegungs-Anschlag vorgespannt. Wenn das Pedal 30 aus dieser in Fig. 1 dargestellten ersten Schwenkposition A entgegen der Rückstell-Federkraft 46 in die Betätigungsrichtung geschwenkt wird, wird die als Übertotpunktfeder funktionierende Feder 44 zunächst zusammengedrückt, wobei sie eine der mit dem Pfeil verdeutlichten Betätigungskraft 48 entgegengerichtete Kraftkomponente 50 erzeugt. Hinter der Totpunktstellung 28 erzeugt die Feder 44 auf dem Schwenkweg bis zur Bewegungsendposition B eine die Betätigungskraft 48 unterstützende Kraftkomponente 52.

Durch eine wahlweise Montage der Federanordnung 12 in den wahlweise realisierbaren Stellungen lassen sich die Kraftkomponenten 50, 52 an gewünschte Kraftverhältnisse anpassen und somit die Ergonomie bei der Betätigung des bewegbaren Lagerteils 16 bzw. des Pedals 30 verbessern.

Die Erfindung eignet sich gut für übliche Betätigungspedale wie für ein Kupplungs- oder Brems- oder Gaspedal im Fußraum der Karosserie des Kraftfahrzeugs, insbesondere eines Personenkraftwagens.

### BEZUGSZEICHENLISTE

- 10: Lagervorrichtung
- 12: Federanordnung
- 14: Tragteil
- 16: Tragteil
- 18: erstes Lager
- 18a: Kalotte
- 20: erstes Ende
- 20a: Kugelkopf
- 22: zweites Lager
- 22a: Kalotte
- 24: zweites Ende
- 24a: Kugelkopf
- 26: Führung
- 28: Totpunktstellung
- 30: Pedal
- 30a: Druckteil
- 30b: Hebelarm
- 32: Lagerbohrung
- 34: Lagerzapfen
- 36: Teleskopteil
- 38: Teleskopteil
- 40: Federteller
- 42: Federteller
- 44: Druckfeder
- 46: Rückstell-Federkraft
- 48: Betätigungskraft
- 50: Kraftkomponente
- 52: Kraftkomponente
- A: erste Bewegungsposition
- B: zweite Bewegungsposition
- a: Abstand
- b: Abstand
- c: Länge
- G1: Gerade
- G2: Gerade
- L: Linie

## Patentansprüche

1. Lagervorrichtung (10) für eine Federanordnung (12) eines Kraftfahrzeugs, umfassend
- ein stationäres Tragteil (14), das ein erstes Lager (18) für das erste Ende (20) der Federanordnung (12) aufweist, und
- ein hängend angeordnetes, um eine Führung (26) schwenkbares Pedal (30), das ein zweites Lager (22) für das zweite Ende (24) der Federanordnung (12) aufweist,
so dass sich bei einer Bewegung des Pedals (30) von einer ersten Bewegungsposition (A) zu einer zweiten Bewegungsposition (B) der Abstand (a) zwischen den Lagern (18, 22) ändert, **dadurch gekennzeichnet dass** die Federanordnung (12) mit ihrem ersten Ende (20) und/oder zweiten Ende (24) im jeweils zugehörigen Lager (18, 22) verstellbar ist, und dass das erste und/oder zweite Lager (18, 22) mehrere in der Schwenkebene hintereinander liegend angeordnete Lagerelemente (18a, 22a) aufweist, in denen das erste und/oder zweite Ende (20, 24) der Federanordnung (12) wahlweise lagerbar ist.

2. Lagervorrichtung nach Anspruch 1, **dadurch** gekenn- . zeichnet, dass die Lagerelemente (18a, 22a) des ersten und/oder zweiten Lagers (18, 22) hintereinander liegend etwa auf einer Linie (L) angeordnet sind, die sich quer zu einer ein Lagerelement des ersten Lagers (18) und ein Lagerelement des zweiten Lagers (22) schneidenden Geraden (G2) erstreckt.

3. Lagervorrichtung nach Anspruch 1 oder 2, **dadurch gekennzeichnet, dass** die ersten Lagerelemente und/oder die zweiten Lagerelemente durch Kalotten (18a, 22a) gebildet sind.

4. Lagervorrichtung nach Anspruch 3, **dadurch gekennzeichnet, dass** die Enden (20, 24) der Federanordnung (12) durch zu den Kalotten (12a, 22a) passende hinterschnittene Kugelköpfe (20a) gebildet sind.

5. Lagervorrichtung nach einem der vorherigen Ansprüche, **dadurch gekennzeichnet, dass** der Abstand (a) zwischen den Lagern (18, 22) verstellbar ist.

6. Lagervorrichtung nach einem der vorherigen Ansprüche, **dadurch gekennzeichnet, dass** das Pedal (30) in einer Ebene bewegbar ist und die Lager (18, 22) in dieser Ebene angeordnet sind.

7. Lagervorrichtung nach einem der vorhergehenden Ansprüche, **dadurch gekennzeichnet, dass** das Pedal (30) einen Abstand (b) vom ersten Lager (18) aufweist, der größer ist als die Länge (c) der Federanordnung (12) und sich vom oberen Bereich des Pedals (30) ein Hebelarm (30b) zum ersten Lager (18) hin erstreckt, der in seinem freien Endbereich das zweite Lager (22) aufweist.

8. Lagervorrichtung nach einem der vorhergehenden Ansprüche, **dadurch gekennzeichnet, dass** das zweite Lagerteil (22) über einen Totpunkt (28) der Feder (44) hinaus bewegbar ist.

9. Lagervorrichtung nach Anspruch 8, **dadurch gekennzeichnet, dass** die Federanordnung (12) hinter dem Totpunkt (28) eine das Pedal (30) vorbewegende Betätigungskraft (48) mit einer Kraftkomponente (52) unterstützt.

10. Lagervorrichtung nach einem der vorhergehenden Ansprüche, **dadurch gekennzeichnet, dass** die Federanordnung (12) eine Druckfeder (44), insbesondere eine Wendelfeder; aufweist, die zwischen zwei Teleskopteilen (36, 38) angeordnet ist.

## Claims

1. Mounting device (10) for a spring arrangement (12) of a motor vehicle, comprising
- a stationary supporting part (14) which has a first mounting (18) for the first end (20) of the spring arrangement (12), and
- a suspended pedal (30) able to pivot about a guide (26), which pedal (30) has a second mounting (22) for the second end (24) of the spring arrangement (12),so that if the pedal (30) moves from a first position in movement (A) to a second position in movement (B), the distance (a) between the mountings (18, 22) changes, **characterised in that** the spring arrangement (12) is adjustable at its first end (20) and/or second end (24) at respective associated mountings (18, 22), and **in that** the first and/or second mounting (18, 22) has a plurality of mounting elements (18a, 22a) which are arranged to be situated one behind the other in the plane of pivot and in a selected one or ones of which the first and/or second end (20, 24) of the spring arrangement (12) can be mounted.

2. Mounting device according to claim 1, **characterised in that** the mounting elements (18a, 22a) of the first and/or second mounting (18, 22) are arranged to be situated one behind the other approximately on a line (L) which extends transversely to a straight line (G2) which intersects a mounting element of the first mounting (18) and a mounting element of the second mounting (22).

3. Mounting device according to claim 1 or 2, **characterised in that** the first mounting elements and/or the second mounting elements are formed by cups (18a, 22a).

4. Mounting device according to claim 3, **characterised in that** the ends (20, 24) of the spring arrangement (12) are formed by ball-heads (20a) which fit into the cups (12a, 22a).

5. Mounting device according to one of the foregoing claims, **characterised in that** the distance (a) between the mountings (18, 22) is adjustable.

6. Mounting device according to one of the foregoing claims, **characterised in that** the pedal (30) is movable in a plane and the mountings (18, 22) are arranged in this plane.

7. Mounting device according to one of the foregoing claims, **characterised in that** the pedal (30) is at a distance (b) from the first mounting (18) which is greater than the length (c) of the spring arrangement (12), and a lever arm (30b) which has the second mounting (22) in its free end region extends from the top region of the pedal (30) towards the first mounting (18).

8. Mounting device according to one of the foregoing claims, **characterised in that** the second mounting (22) can be moved beyond a dead-centre point (28) of the spring (44).

9. Mounting device according to claim 8, **characterised in that**, after the dead-centre point (28) is reached, the spring arrangement (12) exerts a component of force (52) which boosts an actuating force (48) which moves the pedal (30) forward.

10. Mounting device according to one of the foregoing claims, **characterised in that** the spring arrangement (12) has a compression spring (44), and in particular a coil spring, which is arranged between two telescopic parts (36, 38).

## Revendications

1. Ensemble de palier (10) pour un ensemble de ressort (12) d'un véhicule automobile, comprenant
- une partie porteuse (14) stationnaire qui présente un premier palier (18) pour la première extrémité (20) de l'ensemble de ressort (12), et
- une pédale (30) disposée en suspension, pivotant autour d'un guidage (26), qui présente un second palier (22) pour la seconde extrémité (24) de l'ensemble de ressort (12),
de sorte que lors d'un mouvement de la pédale (30) d'une première position de mouvement (A) à une seconde position de mouvement (B), la distance (a) entre les paliers (18, 22) se modifie, **caractérisé en ce que** l'ensemble de ressort (12) avec sa première extrémité (20) et/ou sa seconde extrémité (24) dans le palier afférent respectif (18, 22) peut être réglé, et **en ce que** le premier et/ou le second palier (18, 22) présente plusieurs éléments de palier (18a, 22a) disposés les uns derrières les autres dans le plan de pivotement, dans lesquels la première et/ou la seconde extrémité (20, 24) de l'ensemble de ressort (12) peut être logée au choix.

2. Ensemble de palier selon la revendication 1, **caractérisé en ce que** les éléments de palier (18a, 22a) du premier et/ou du second palier (18, 22) sont disposés les uns derrière les autres à peu près sur une ligne (L) qui s'étend transversalement à une ligne droite (G2) coupant un élément de palier du premier palier (18) et un élément de palier du second palier (22).

3. Ensemble de palier selon la revendication 1 ou 2, **caractérisé en ce que** les premiers éléments de palier et/ou les seconds éléments de palier sont formés par des calottes (18a, 22a).

4. Ensemble de palier selon la revendication 3, **caractérisé en ce que** les extrémités (20, 24) de l'ensemble de ressort (12) sont formées par des têtes sphériques (20a) contre-dépouillées de manière adaptée aux calottes (12a, 22a).

5. Ensemble de palier selon l'une quelconque des revendications précédentes, **caractérisé en ce que** la distance (a) entre les paliers (18, 22) peut être réglée.

6. Ensemble de palier selon l'une quelconque des revendications précédentes, **caractérisé en ce que** la pédale (30) peut être déplacée dans un plan et les paliers (18, 22) sont disposés dans ce plan.

7. Ensemble de palier selon l'une quelconque des revendications précédentes, **caractérisé en ce que** la pédale (30) présente une distance (b) par rapport au premier palier (18) qui est supérieure à la longueur (c) de l'ensemble de ressort (12) et un bras de levier (30b) s'étend depuis la zone supérieure de la pédale (30) vers le premier palier (18), lequel présente dans sa zone d'extrémité libre le second palier (22).

8. Ensemble de palier selon l'une quelconque des revendications précédentes, **caractérisé en ce que** la seconde partie de palier (22) peut être déplacée au-delà d'un point mort (28) du ressort (44).

9. Ensemble de palier selon la revendication 8, **caractérisé en ce que** l'ensemble de ressort (12) soutient derrière le point mort (28) une force d'actionnement (48) déplaçant la pédale (30) en amont avec une composante de force (52).

10. Ensemble de palier selon l'une quelconque des revendications précédentes, **caractérisé en ce que** l'ensemble de ressort (12) présente un ressort de pression (44), en particulier un ressort spiral qui est disposé entre deux éléments télescopiques (36, 38).
